# DEMANDE DE BREVET EUROPEEN

(11) **EP 1 503 542 A2**
(43) Date de publication de la demande: **02.02.2005**
(21) Numéro de dépôt: 04291915.9
(22) Date de dépôt: 27.07.2004
(51) Int. Cl.: H04L 12/24

(54) **Dispositif et procédé de traitement de données de trafic réseau pour l'auto-configuration d'un routeur**

(30) Priorité: 01.08.2003 FR 0309507
(71) Demandeur: ALCATEL, 75008 Paris (FR)
(72) Inventeur: Galand, Damien, 92370 Chaville (FR); Bereski, Philippe, 91390 Morsang sur Orge (FR)
(74) Mandataire: Sciaux, Edmond

(57) **Abrégé**

Un dispositif de traitement de données (D) est implanté dans un routeur de communications (R) présentant une architecture en couches comportant au moins une couche physique (n°1), couplée par au moins une liaison (Li) à au moins un réseau de communications (Ni), au moins une couche de liaison de données (n°2) et au moins une couche réseau (n°3). Le dispositif (D) comprend, d'une part, des moyens de traitement (PM) implantés dans chaque couche de liaison de données (n°2) et chargés d'analyser les données de chaque trafic réseau parvenant au niveau d'une couche physique (n°1) via chacune de ses liaisons (Li), et de déterminer à partir des données de trafic réseau des données de configuration nécessaires à la configuration de la couche réseau (n°3) concemée, et d'autre part, une interface de programmation d'applications (API) intercalée entre la couche de liaison de données (n°2) et la couche réseau (n°3) concernées, indépendante de chaque technologie de réseau et chargée de transférer à la couche réseau (n°3) concemée les données de configuration déterminées de sorte qu'elle soit configurée en fonction de chaque trafic réseau.

## Description

L'invention concerne le domaine des réseaux de communications et plus précisément la configuration des routeurs équipant de tels réseaux.

Comme le sait l'homme de l'art, un routeur est un équipement constituant un noeud de réseau, dont l'architecture peut être décomposée en sept couches selon le modèle en couches OSI (pour « Open System Interconnexion »). Ces sept couches sont hiérarchisées, chaque couche utilisant les informations de la couche du dessous (niveau inférieur) et fournissant un service à la couche du dessus (niveau supérieur).

En partant du niveau le plus bas, ces sept couches sont généralement appelées couche physique (« physical layer » - n°1 ), couche de liaison de données (« datalink layer » - n°2), couche réseau (« network layer » - n°3), couche de transport (« transport layer » - n°4), couche de session (« session layer » - n°5), couche de présentation (« presentation layer » - n°6) et couche d'applications (« application layer » - n°7).

Certains routeurs, comme par exemple les routeurs IP, étant raccordés à plusieurs réseaux de données utilisant des versions différentes de protocoles Internet et/ou mettant en oeuvre des services de types différents et/ou utilisant des matériels de communication différents, leur couche de liaison de données (n°2) est donc dépendante des différentes technologies de réseau, alors même que leur couche réseau (n°3) est indépendante de celles-ci. Par conséquent, pour que la couche réseau du routeur puisse utiliser de façon efficace les informations de la couche de liaison de données, ladite couche réseau doit être configurée.

Aujourd'hui, la configuration de la couche réseau des routeurs s'effectue à distance via une plateforme de gestion de réseau. Les réseaux évoluant en permanence, les superviseurs des réseaux doivent donc reconfigurer constamment leurs routeurs, ce qui, d'une part, est long et fastidieux, notamment en raison du nombre important de routeurs qui équipent chaque réseau, et d'autre part, consomme inutilement des ressources.

L'invention a donc pour but de remédier à cet inconvénient.

Elle propose à cet effet un procédé de traitement de données pour un routeur de communications présentant une architecture en couches comportant au moins une couche physique couplée par au moins une liaison à au moins un réseau de communications et placée juste en dessous d'au moins une couche de liaison de données, elle-même placée juste en dessous d'au moins une couche réseau.

Ce procédé de traitement se caractérise par le fait qu'il consiste, d'une première part, à analyser au niveau d'une couche de liaison de données (n°2) du routeur les données des différents trafics réseau (ou trames) qui parviennent au niveau d'une couche physique (n°1), via chacune de ses liaisons, d'une deuxième part, à déterminer à partir des données de trafic réseau des données de configuration de la couche réseau (n°3) concemée, et d'une troisième part, à configurer la couche réseau concernée à partir des données de configuration, en fonction de chaque trafic réseau.

En d'autres termes, chaque routeur effectue son auto-configuration en fonction des données de trafic qu'il reçoit au niveau de sa ou ses couches physiques.

Selon une autre caractéristique de l'invention, la configuration s'effectue par transfert des données de configuration à la couche réseau concernée via au moins une interface de programmation d'applications (ou API pour « Application Programming Interface »), intercalée entre la ou les couches de liaison de données et la couche réseau concernée et indépendante de chaque technologie de réseau.

Préférentiellement, on détermine, à partir des données de trafic réseau, des données d'information qui dépendent de chaque technologie de réseau mise en oeuvre par la couche de liaison de données concernée, puis on transforme ces données d'information en données de configuration indépendantes de chaque technologie de réseau (afin de garantir la réutilisation de cette interface API). Dans ce cas, il est avantageux de surveiller indépendamment les données de trafic réseau qui parviennent au niveau de la couche physique via chacune de ses liaisons réseau, puis d'extraire de ces données de trafic des données d'information qui dépendent des différentes technologies de réseau véhiculées par chaque liaison réseau. Il est important de noter qu'une liaison réseau peut transporter simultanément plusieurs types de données de niveau deux (couche de liaison de données), et que de ce fait plusieurs technologies de réseau peuvent transiter sur une même liaison. On peut ensuite agréger les données d'information extraites (qui correspondent à chaque trafic), et les conformer selon un format choisi. Enfin, on peut convertir les données d'information agrégées et conformées en données de configuration indépendantes de chaque technologie de réseau.

Préférentiellement, on procède périodiquement à l'analyse des données de trafic afin que chaque couche réseau soit configurée périodiquement. Mais, on peut également envisager de déclencher l'analyse à réception d'une notification dédiée sur l'une des liaisons.

Par ailleurs, les données de configuration qui sont déterminées et transférées à une couche réseau sont par exemple la taille maximale d'unité de transmission (ou MTU pour « Maximum Transmission Unit »), les différentes versions de protocole de la couche réseau utilisées au sein de chaque réseau auquel la couche physique du routeur est couplée (telles que IPv4, IPv6, Decnet, Appletalk, IPX, ...), les différentes versions de service de couche réseau utilisées au sein de chaque réseau auquel une couche physique du routeur est couplée (telles que les différents protocoles de routage), et les adresses de couche réseau des routeurs voisins du routeur auquel une couche physique est couplée.

L'invention propose également un dispositif de traitement de données pour un routeur de communications présentant une architecture en couches.

Ce dispositif se caractérise par le fait qu'il comprend, d'une part, des moyens de traitement implantés dans chaque couche de liaison de données (n°2) et chargés d'analyser les données de chaque trafic réseau (ou trames) qui parviennent au niveau d'une couche physique (n°1), via chacune de ses liaisons, et de déterminer à partir de ces données de trafic réseau des données de configuration de la couche réseau (n°3) concernée, et d'autre part, au moins une interface de programmation d'applications (ou API) intercalée entre la ou les couches de liaison de données et la couche réseau concernée, indépendante de chaque technologie de réseau et chargée de transférer à la couche réseau concemée les données de configuration déterminées de sorte que celle-ci soit configurée en fonction de chaque trafic réseau.

Préférentiellement, les moyens de traitement sont tout d'abord chargés de déterminer, à partir des données de trafic réseau, des données d'information qui dépendent de chaque technologie de réseau mise en oeuvre par une couche de liaison de données, puis de transformer ces données d'information en données de configuration indépendantes de chaque technologie de réseau. Dans ce cas, il est avantageux que les moyens de traitement comportent des modules de surveillance en nombre égal au nombre de liaisons réseau au niveau de la couche physique concernée, chaque module de surveillance étant alors chargé de surveiller les données de trafic réseau, parvenant au niveau de la couche physique concemée, via l'une de ses liaisons réseau, et d'extraire de celles-ci les données d'information dépendant de la technologie de réseau associée à la liaison réseau concernée. En variante, on peut envisager d'utiliser un même module de surveillance pour traiter toutes les liaisons d'un même type de couche physique en maintenant des structures de données séparées pour chaque interface physique, par exemple en utilisant la technique dite du « multi-thread ». Par ailleurs, il est alors préférable que les moyens de traitement comportent des modules de mise en forme en nombre égal au nombre de liaisons réseau d'une couche physique, chaque module de mise en forme étant associé à un module de surveillance et chargé, d'une part, d'agréger les données d'information extraites par le module de surveillance associé, et d'autre part, de conformer ces données d'information agrégées selon un format choisi. En variante, on peut envisager d'utiliser un même module de mise en forme couplé au module de surveillance traitant toutes les liaisons d'un même type de couche physique. En outre, les moyens de traitement comportent alors un module de conversion couplé aux différents modules de mise en forme et à l'interface de programmation d'applications (API) concernée et chargé de convertir les données d'information agrégées et conformées en données de configuration indépendantes de chaque technologie de réseau.

Par ailleurs, les moyens de traitement sont préférentiellement agencés de manière à effectuer périodiquement les analyses afin que chaque couche réseau soit configurée périodiquement. Mais, on peut également envisager que les moyens de traitement soient agencés de manière à effectuer une analyse à réception d'une notification dédiée sur l'une des liaisons.

L'invention porte en outre sur un routeur de communications équipé d'un dispositif de traitement du type de celui présenté ci-avant.

L'invention est particulièrement bien adaptée, bien que de façon non exclusive, aux réseaux de communications à protocole Intemet (IP).

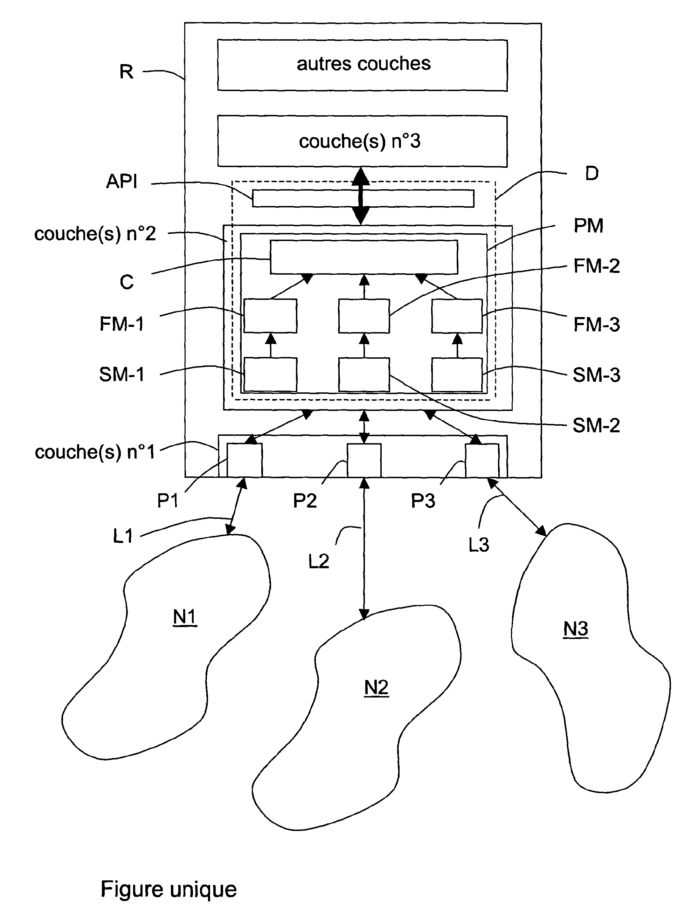

D'autres caractéristiques et avantages de l'invention apparaîtront à l'examen de la description détaillée ci-après, et du dessin annexé, sur lequel l'unique figure illustre de façon schématique un exemple de réalisation d'un routeur équipé d'un dispositif de traitement selon l'invention et raccordé à plusieurs (trois) réseaux de communications. Le dessin annexé pourra non seulement servir à compléter l'invention, mais aussi contribuer à sa définition, le cas échéant.

L'invention a pour objet de permettre l'auto-configuration d'un routeur de communications par l'analyse des trafics qu'il reçoit.

Comme cela est illustré sur l'unique figure, un routeur de communications R présente une architecture qui peut être décomposée en sept couches hiérarchisées selon le modèle en couches OSI (pour « Open System Interconnexion »).

Au niveau le plus bas, on trouve la ou les couches physiques (« physical layer » - couche(s) n°1), puis vien(nen)t la ou les couches de liaison de données (« datalink layer » - couche(s) n°2), puis la ou les couches réseau (« network layer » - couche(s) n°3), puis les autres couches dont la couche de transport (« transport layer » - couche n°4), la couche de session (« session layer » - couche n°5), la couche de présentation (« presentation layer » - couche n°6) et la couche d'applications (« application layer » - couche n°7, la plus élevée). Cette architecture et les sept couches qui la constituent étant bien connues de l'homme de l'art, elles ne seront pas décrites ici. Il est simplement rappelé que chaque couche physique (n°1) et chaque couche de liaison de données (n°2) sont dépendantes des technologies des réseaux auxquelles elles sont couplées, tandis que chaque couche réseau (n°3) est indépendante desdites technologies de réseau.

Un tel routeur R est généralement raccordé à plusieurs réseaux de communications (Ni) dont il constitue l'un des noeuds. Dans l'exemple illustré, le routeur R est raccordé par trois ports physiques P1 à P3 à trois réseaux de communications N1 à N3. Par exemple, ces trois réseaux de communications sont des réseaux de données à protocole IP, disposant éventuellement, et notamment, de versions différentes de protocoles de couche réseau, telles que IPv4, IPv6, Decnet, et/ou de versions différentes de services de couche réseau, telles que des protocoles de routage différents.

Lorsque les réseaux, auxquels le routeur R est raccordé par ses ports physiques Pi associés à sa ou ses couches physiques (n°1), sont de type IP, le routeur est dit de type IP. Dans ce qui suit on considérera, à titre d'exemple illustratif, que le routeur R est un routeur IP et qu'il ne comporte qu'une couche physique et une couche de liaison de données. Mais bien entendu, le routeur pourrait être d'un autre type qu'IP et/ou comporter plusieurs couches physiques et/ou plusieurs couches de liaison de données.

Afin de permettre une adaptation rapide, et sans intervention externe (distante ou non), du routeur R aux évolutions des trois réseaux IP Ni auxquels il est raccordé, l'invention propose de l'équiper d'un dispositif de traitement D.

A cet effet, le dispositif D comporte des moyens de traitement PM, implantés dans la couche de liaison de données (n°2), et une (ou plusieurs) interface(s) de programmation d'applications API(s) intercalée(s) entre la couche de liaison de données et la (ou chaque) couche réseau (n°3).

Bien que cela n'apparaisse pas sur l'unique figure, plusieurs couches réseau (n°3) peuvent coexister au sein d'un routeur R, et dans ce cas on prévoit préférentiellement autant d'interface de programmation d'applications API que de couches réseau. Cela permet en effet au routeur R de fonctionner en mode multi-protocole.

Les moyens de traitement PM sont agencés de manière à analyser les données de chaque trafic réseau (ou trames de données) qui parviennent au niveau des trois ports physiques Pi associés à la couche physique (n°1), via chacune de ses liaisons réseau Li, et à déterminer à partir de ces données de trafic réseau des données de configuration de la couche réseau (n°3).

Plus précisément, on reçoit des paquets avec un entête et une portion utile (ou « payload ») de niveau deux (couche n°2), qui contient à son tour un entête et une portion utile de niveau trois (couche n°3). La nature du niveau trois est déterminée par un code spécial dans l'entête du paquet de niveau deux, par exemple égal à 0x0800 pour IPv4 ou 0x86DD pour IPv6 lorsqu'il est transporté par une couche de niveau deux de type ethemet. Une fois connue la nature de la trame de niveau trois, les informations spécifiques de ce niveau trois peuvent à leur tour être examinées dans l'entête de niveau trois, par exemple « code protocole 1 » pour ICMP dans IPv4 ou « valeur 58 du NextHeader » pour ICMP dans IPv6.

Chaque interface de programmation d'applications API est chargée de transférer les données de configuration, déterminées par les moyens de traitement PM, de la couche de liaison de données (n°2) vers la couche réseau (n°3) à laquelle elle est couplée de sorte que cette dernière soit configurée en fonction des différents trafics réseau que reçoit le routeur R.

Grâce au dispositif de traitement D, chaque routeur R peut effectuer sa propre configuration en fonction des données de trafic (ou trames) qu'il reçoit au niveau de sa couche physique (n°1).

L'analyse des données de trafic s'effectue de préférence périodiquement, par exemple toutes les 5 minutes. Dans ce cas, la couche réseau est également reconfigurée selon la même périodicité. On peut également envisager un déclenchement de l'analyse des données de trafic en cas de réception d'une notification dédiée sur une liaison Li.

Dans un mode de réalisation particulièrement avantageux, illustré sur l'unique figure, les moyens de traitement PM comportent trois modules de surveillance SM-i associés chacun à l'un des trois ports physiques Pi et couplés respectivement à trois modules de mise en forme FM-i, eux mêmes couplés à un module de conversion CM.

Chaque module de surveillance SM-i est agencé de manière à surveiller (ou observer) les données de trafic réseau (ou trames) qui sont reçues par l'un des ports physiques Pi, afin d'extraire de celles-ci des données d'information qu'elles contiennent, utiles à la configuration de la couche réseau (n°3), et qui dépendent de la technologie de réseau qui est mise en oeuvre par la couche de liaison de données (n°2) et qui est associée à la liaison Li entre ledit port Pi et le réseau Ni.

Par exemple, les données d'information extraites sont les caractéristiques des routeurs placés « au bout » des liaisons (ou liens) Li. Ces caractéristiques permettront de configurer de façon appropriée le routeur.

Chaque module de mise en forme FM-i reçoit du module de surveillance SM-i, auquel il est couplé, les données qu'il a extraites, afin de les agréger (il peut en effet recevoir des rafales (ou « bursts ») d'informations qu'il est alors utile d'agréger afin de ne présenter que ce qui est réellement utile à la couche supérieure), puis de les conformer (ou formater) selon un format choisi, par exemple XML ou ASN1 (mais tout autre type de format approprié peut être envisagé).

Les données agrégées et conformées par chaque module de mise en forme FM-i, et dépendantes des technologies réseau mises en oeuvre par la couche de liaison de données (n°2), alimentent le module de conversion CM. Celui-ci est chargé de les convertir (ou transformer) en données de configuration indépendantes desdites technologies de réseau et nécessaires à la couche réseau (n°1) pour s'auto-configurer.

Par exemple, les données de configuration sont représentatives de la taille maximale d'unité de transmission (ou MTU pour « Maximum Transmission Unit »), ou des différentes versions de protocole de couche réseau qui sont utilisées au sein des différents réseau Ni (IPv4, IPv6, Decnet, et analogues), ou bien des différentes versions de service de couche réseau utilisées au sein des différents réseaux Ni (différents protocoles de routage, différentes signalisations RSVP, LDP et analogues), ou encore des adresses de couche réseau des routeurs voisins (cela peut notamment permettre au routeur R d'effectuer des observations de routage - par exemple la couche de liaison de données peut générer des requêtes de type ARP pour obtenir des routeurs voisins, sur chaque lien Li, leurs adresses IPv4 (ou IPv6)).

Le module de conversion CM est couplé à l'interface de programmation d'applications API qui est chargée de transférer les données de configuration vers la couche réseau concernée et qui est indépendante de la technologie de niveau deux.

A réception de ces données de configuration, la couche réseau (n°3) concernée est alors capable de se configurer, classiquement, permettant ainsi à des services de couche supérieur d'être renseignés sur des données, comme par exemple la taille MTU. Le routeur R est alors adapté aux différents trafics qu'il reçoit des trois réseaux IP Ni auxquels il est raccordé par ses ports physiques Pi, jusqu'à la prochaine modification qui surviendra sur l'un des réseaux Ni et qui sera détectée lors des analyses ultérieures.

Le dispositif de traitement D selon l'invention, et notamment ses modules de surveillance SM-i, ses modules de mise en forme FM-i, son module de conversion CM et chaque interface de programmation d'applications API, peuvent être réalisés sous la forme de circuits électroniques, de modules logiciels (ou informatiques), ou d'une combinaison de circuits et de logiciels.

Il est important de noter que l'on peut envisager une variante dans laquelle un même module de surveillance est utilisé pour traiter toutes les liaisons d'un même type de couche physique. Il faut alors maintenir des structures de données séparées pour chaque interface physique, par exemple en utilisant la technique dite du « multi-thread ». Dans ce cas, un même module de mise en forme est préférentiellement couplé au module de surveillance utilisé pour traiter toutes les liaisons d'un même type de couche physique.

L'invention offre également un procédé de traitement de données pour un routeur de communications R présentant une architecture en couches.

Celui-ci peut être notamment mis en oeuvre à l'aide du dispositif de traitement D et du routeur de communications R présentés ci-avant. Les fonctions et sous-fonctions principales et optionnelles assurées par les étapes de ce procédé étant sensiblement identiques à celles assurées par les différents moyens constituant le dispositif de traitement D et/ou le routeur de communications R, seules seront résumées ci-après les étapes mettant en oeuvre les fonctions principales du procédé selon l'invention.

Ce procédé de traitement consiste, d'une première part, à analyser au niveau d'une couche de liaison de données (n°2) du routeur R les données des différents trafics réseau qui parviennent au niveau d'une couche physique (n°1), via chacune de ses liaisons Li, d'une deuxième part, à déterminer à partir des données de trafic réseau des données de configuration de la couche réseau (n°3) concernée, et d'une troisième part, à configurer la couche réseau concernée à partir des données de configuration, en fonction de chaque trafic réseau.

L'invention ne se limite pas aux modes de réalisation de dispositif de traitement, de routeur de communications et de procédé de traitement décrits ci-avant, seulement à titre d'exemple, mais elle englobe toutes les variantes que pourra envisager l'homme de l'art dans le cadre des revendications ci-après.

## Revendications

1. Procédé de traitement de données pour un routeur de communications (R) présentant une architecture en couches comportant au moins une couche physique couplée par au moins une liaison (Li) à au moins un réseau de communications (Ni) et placée juste en dessous d'au moins une couche de liaison de données, elle-même placée juste en dessous d'au moins une couche réseau, **caractérisé en ce qu'**il consiste i) à analyser au niveau d'une couche de liaison de données les données de chaque trafic réseau parvenant au niveau d'une couche physique, via chacune de ses liaisons, ii) à déterminer à partir desdites données de trafic réseau des données de configuration de ladite couche réseau concernée, et iii) à configurer ladite couche réseau concernée à partir desdites données de configuration, en fonction de chaque trafic réseau.

2. Procédé selon la revendication 1, **caractérisé en ce que** ladite configuration s'effectue par transfert desdites données de configuration à ladite couche réseau concernée via au moins une interface de programmation d'applications (API), intercalée entre ladite couche de liaison de données et ladite couche réseau et indépendante de chaque technologie de réseau.

3. Procédé selon l'une des revendications 1 et 2, **caractérisé en ce qu'**à partir desdites données de trafic réseau on détermine des données d'information dépendant de chaque technologie de réseau mise en oeuvre par ladite couche de liaison de données concernée, puis on transforme lesdites données d'information en données de configuration indépendantes de chaque technologie de réseau.

4. Procédé selon la revendication 3, **caractérisé en ce que** l'on surveille indépendamment lesdites données de trafic réseau parvenant au niveau de ladite couche physique via chacune de ses liaisons réseau, et l'on extrait desdites données de trafic des données d'information dépendant de la technologie de réseau associée à chaque liaison réseau (Li).

5. Procédé selon la revendication 4, **caractérisé en ce que** l'on agrège les données d'information extraites correspondant à chaque trafic, et l'on conforme lesdites données d'information agrégées selon un format choisi.

6. Procédé selon la revendication 5, **caractérisé en ce que** l'on convertit lesdites données d'information agrégées et conformées en données de configuration indépendantes de chaque technologie de réseau.

7. Procédé selon l'une des revendications 1 à 6, **caractérisé en ce que** l'on procède à l'analyse desdites données de trafic de façon périodique, de sorte que chaque couche réseau soit configurée périodiquement.

8. Procédé selon l'une des revendications 1 à 7, **caractérisé en ce que** l'on procède à l'analyse desdites données de trafic à réception d'une notification dédiée sur l'une desdites liaisons (Li).

9. Procédé selon l'une des revendications 1 à 8, **caractérisé en ce que** lesdites données de configuration sont choisies dans un groupe comprenant au moins une taille maximale d'unité de transmission, des versions de protocoles de couche réseau utilisées au sein de chaque réseau (Ni) auquel une couche physique du routeur (R) est couplée, des versions de services de couche réseau utilisées au sein de chaque réseau (Ni) auquel une couche physique dudit routeur (R) est couplée, et des adresses de couche réseau de routeurs voisins dudit routeur (R) auquel une couche physique est couplée.

10. Procédé selon la revendication 9, **caractérisé en ce que** lesdites versions de protocole sont choisies dans un groupe comprenant au moins IPv4, IPv6 et Decnet.

11. Procédé selon l'une des revendications 9 et 10, **caractérisé en ce que** lesdites versions de service sont choisies dans un groupe comprenant au moins les protocoles de routage.

12. Dispositif de traitement de données (D) pour un routeur de communications (R) présentant une architecture en couches comportant au moins une couche physique couplée par au moins une liaison (Li) à au moins un réseau de communications (Ni) et placée juste en dessous d'au moins une couche de liaison de données, elle-même placée juste en dessous d'au moins une couche réseau, **caractérisé en ce qu'**il comprend des moyens de traitement (PM) implantés dans chaque couche de liaison de données et agencés pour analyser les données de chaque trafic réseau parvenant au niveau d'une couche physique, via chacune de ses liaisons (Li), et pour déterminer à partir desdites données de trafic réseau des données de configuration propres à permettre la configuration de la couche réseau concernée, et au moins une interface de programmation d'applications (API) intercalée entre la couche de liaison de données concernée et la couche réseau concernée, indépendante de chaque technologie de réseau et agencée pour transférer à ladite couche réseau concernée lesdites données de configuration déterminées de sorte qu'elle soit configurée en fonction de chaque trafic réseau.

13. Dispositif selon la revendication 12, **caractérisé en ce que** lesdits moyens de traitement (PM) sont agencés pour déterminer à partir desdites données de trafic réseau des données d'information dépendant de chaque technologie de réseau mise en oeuvre par ladite couche de liaison de données concernée, puis transformer lesdites données d'information en données de configuration indépendantes de chaque technologie de réseau.

14. Dispositif selon la revendication 13, **caractérisé en ce que** lesdits moyens de traitement (PM) comportent des modules de surveillance (SM-i) en nombre égal au nombre de liaisons réseau (Li) de chaque couche physique, chaque module de surveillance (SM-i) étant agencé pour surveiller lesdites données de trafic réseau, parvenant au niveau de ladite couche physique concernée, via l'une de ses liaisons réseau (Li), et pour extraire de celles-ci lesdites données d'information dépendant de la technologie de réseau associée à ladite liaison réseau (Li).

15. Dispositif selon la revendication 14, **caractérisé en ce que** lesdits moyens de traitement (PM) comportent des modules de mise en forme (FM-i) en nombre égal au nombre de liaisons réseau (Li) de chaque couche physique, chaque module de mise en forme (FM-i) étant associé à un module de surveillance (SM-i) et agencé, d'une part, pour agréger lesdites données d'information extraites par ledit module de surveillance associé, et d'autre part, pour conformer lesdites données d'information agrégées selon un format choisi.

16. Dispositif selon la revendication 15, **caractérisé en ce que** lesdits moyens de traitement (PM) comportent un module de conversion (CM) couplé à chaque module de mise en forme (FM-i) et à ladite interface de programmation d'applications (API) concernée et agencé pour convertir lesdites données d'information agrégées et conformées en données de configuration indépendantes de chaque technologie de réseau.

17. Dispositif selon l'une des revendications 12 à 16, **caractérisé en ce que** lesdits moyens de traitement (PM) sont agencés pour procéder à ladite analyse de façon périodique, de sorte que ladite couche réseau soit configurée périodiquement.

18. Dispositif selon l'une des revendications 12 à 17, **caractérisé en ce que** lesdits moyens de traitement (PM) sont agencés pour procéder à l'analyse desdites données de trafic à réception d'une notification dédiée sur l'une desdites liaisons (Li).

19. Dispositif selon l'une des revendications 12 à 18, **caractérisé en ce que** lesdites données de configuration sont choisies dans un groupe comprenant au moins une taille maximale d'unité de transmission, des versions de protocoles de couche réseau utilisées au sein de chaque réseau (Ni) auquel la couche physique dudit routeur (R) est couplée, des versions de services de couche réseau utilisées au sein de chaque réseau (Ni) auquel la couche physique dudit routeur (R) est couplée, et des adresses de couche réseau de routeurs voisins dudit routeur (R) auquel ladite couche physique est couplée.

20. Dispositif selon la revendication 19, **caractérisé en ce que** lesdites versions de protocole sont choisies dans un groupe comprenant au moins IPv4, IPv6 et Decnet.

21. Dispositif selon l'une des revendications 19 et 20, **caractérisé en ce que** lesdites versions de service sont choisies dans un groupe comprenant au moins les protocoles de routage.

22. Routeur de communications (R), **caractérisé en ce qu'**il comprend un dispositif de traitement (D) selon l'une des revendications 12 à 21.

23. Utilisation du dispositif de traitement (D), du routeur de communications (R) et du procédé de traitement selon l'une des revendications précédentes dans les réseaux de communications (Ni) à protocole Internet (IP).
